# EUROPEAN PATENT APPLICATION

(11) **EP 4 269 484 A1**
(43) Date of publication of application: **01.11.2023**
(21) Application number: 22170953.8
(22) Date of filing: 29.04.2022
(51) Int. Cl.: C08J 11/14

(54) **DECHLORINATION OF PLASTIC MATERIALS USING SUPERHEATING IN WATER**

(71) Applicant: Nederlandse Organisatie voor toegepast- natuurwetenschappelijk onderzoek TNO, 2595 DA 's-Gravenhage (NL)
(72) Inventor: PELS, Jan Remmert, 2595 DA 's-Gravenhage (NL); ABELHA, Pedro, 2595 DA 's-Gravenhage (NL)
(74) Representative: V.O.

(57) **Abstract**

The invention is in the field of recycling plastic material. In particular, the invention is directed to a method for dechlorination of a chlorine-containing polymer comprised in plastic material using superheating. The invention is further directed to a dechlorinated polymer obtainable by the method. The method is performed in water, with a pH of at most 7 during the method.

## Description

The invention is in the field of recycling and processing of plastic material. In particular, the invention is directed to a method for dechlorination of a chlorine-containing polymer comprised in a plastic material such as plastic waste. The invention is further directed to a dechlorinated plastic material obtainable by the method.

It is widely acknowledged that plastic waste has a negative impact on the environment. Methods to recycle plastics are therefore continuously sought after in attempt to achieve a circular economy (*i.e.* a system of closed loops in which renewable sources are used and used materials lose their value as little as possible).

Typically, a recycling process starts after a plastic product has reached its end-of-life and is considered waste. The waste is collected and sorted. Sorting typically comprises mechanical sorting first by type of material (e.g. plastics, paper), after which the separate plastics stream is sorted by type of polymer, for instance using infrared spectroscopy. This results in several mono streams and a waste stream. A mono stream ideally comprises substantially one type of polymer or a plurality of similar types of polymers. However mono streams typically do not reach a high enough purity for the materials to be used or to be interchangeable with virgin materials.

One example of plastics that are challenging to reuse and recycle are plastics comprising chlorinated polymers, such as polyvinyl chloride (PVC). PVC is a very versatile material that has numerous applications, in *i.a.* pipes, flooring and window frames. While there are several methods proposed to increase the recyclability of chlorinated polymers, still a large part of the used plastics is incinerated. This however, gives a problem with chlorine in the flue gas, such as enhanced corrosion and emission of dioxides.

Several of the methods that have been proposed to increase the recyclability include mechanical recycling wherein the polymer chains are not broken down. However, for mechanical recycling, the provided waste stream needs to be clean (*i.e.* pure). Moreover, an additional problem is that even when PVC material is 'clean', it contains various co-polymers, plasticizers, fire retardants and lubricants, in various ratios and composition depending on the intended application. With mechanical recycling these materials are well blended, thereby becoming a homogeneous mixture, but not conforming to any standard; or they are not well blended and not homogeneous, which gives rise to inconsistent product specs.

Other methods include feedstock recycling, wherein the polymer chains are broken. This includes gasification, pyrolysis and dehydrochlorination. Gasification and pyrolysis typically release hydrogen chloride in the hot gas phase, resulting in highly corrosive materials and risk of forming chlorinated polycyclic aromatic hydrocarbons.

One gasification method dedicated for high-chlorine-containing feedstock is applied commercially as the Ebara Ube Industries Processes (EUP) in Japan. This includes a relatively low-temperature gasification (600-800 °C) and a second high-temperature gasification (around 1350 °C) at a pressure of roughly 10 bar to allow PVC to convert into carbon dioxide and syngas. However, this requires high temperatures and a significant investment, and a large-scale operation is needed to be profitable. And the method still suffers from corrosive HCl flue gases.

Another gasification method suitable for PVC is the Sumitomo process, which uses a high-temperature packed bed of approximately 2000 °C and a lower temperature fluidized bed around 800-1100 °C to produce a syngas stream (see Yamamoto et al. Sustainable Development of Energy, Water and Environmental Systems, 2007, pp. 536-547) However, when PVC is used as feed, it requires more additional coke or wood as a carbon source due to the relatively low calorific value. Further, it requires very high temperatures.

Another type of method includes dehydrochlorination. This process can be applied in water or in an ionic liquid (see *i.a.* Zhao et al. The 5th ISFR, October 11-14, 2009, Chengdu, China). Ionic liquids are however expensive.

One example of dechlorination in water is described in US3826789. Herein, PVC is added to an aqueous solution of a basic inorganic material to react and release chlorine from the PVC.

Another particular example of dechlorination of PVC in mixed plastic-containing waste in water is described in WO02/074845. The method uses mixed plastics that are heated batch-wised in an aqueous environment. The chlorine is transferred from the plastic to an alkaline aqueous phase wherein the base is used to minimize corrosion and to accelerate the dechlorination reaction. Drawbacks thereof include the formation of a chloride salt as a side product, which has minimal commercial value. Moreover, use of alkaline base is found to disadvantageously increase the oxygen-to-carbon ratio in the dechlorinated product.

It is an object of the present invention to provide an improved method for dechlorinating of plastic material containing a chlorine-containing polymer that overcomes at least part of the above-mentioned drawbacks. In particular, the method according to the present invention may be used to provide a dechlorinated plastic material with a low oxygen-content. An additional advantage of the present invention is that a hydrogen chloride solution is formed, which has a high commercial value.

Thus, in a first aspect the invention is directed to a method for dechlorination of a plastic material containing a chlorine-containing polymer, wherein the method comprises providing a plastic material, preferably a plastic waste, and water in a vessel to obtain an aqueous plastic mixture. The plastic material comprises the chlorine-containing polymer. The method further comprises superheating the aqueous plastic mixture to a temperature of at least 210°C to obtain an at least partially dechlorinated plastic material (herein also referred to as dechlorinated plastic material). Notably, during the superheating, the pH of the water in the aqueous plastic mixture is maintained at at most 7.

The invention can be used to dechlorinate any type of plastic material comprising chlorine-containing polymer. The plastic material typically comprises plastic waste, which may instance include unpolluted or polluted PVC waste and/or electricity cables with PCT insulation. The plastic waste that can suitably be used for the present invention can be provided after it has been mechanically separated and provided as a mono stream. The plastic material may have been subjected to a pre-treatment step, such as shredding. It was found that the size of the plastic material does not significantly influence the dechlorination process. However, the size is typically such that sufficient material is contacted with the water to allow for the dechlorination. Accordingly, preferably, the plastic material comprises, more preferably consists essentially of, pieces having a smallest dimension of at most 10 mm, preferably at most 3 mm, more preferably at most 2 mm, most preferably at most 1 mm. At the other hand, the plastic material preferably has a largest dimension of more than 0.5 mm, more preferably more than 1 mm. It was found for example that the present invention is particularly suitable for the treatment of non-powdery plastic materials, e.g. of materials comprising particles having particles sizes of more than 0.5 mm, preferably more than 1 mm. Such materials are accordingly also preferred.

The plastic material can comprise other polymers or additives besides the chlorine-containing polymer. These additives are *e.g.* fireretardants, plasticizers, fillers and the like. These additives may make up to about 30 wt% of the plastic material. As such, in a typical embodiment the plastic material comprises at least 50 wt%, preferably at least 70 wt% of the chlorine-containing polymer based on the total weight of the plastic material. There is however, no technically determined minimum for the amount of chlorine-containing polymer that is contained in the plastic material. The minimum in practice will be driven by economics and commercial reasons. Accordingly, preferably, the plastic material has a chlorine content of at least 10 wt%, based on the total weight of the plastic material.

The aforementioned additives in the plastic material may dissolve in the aqueous environment during the method. Other polymers that can be present in the plastic material may for instance be polyolefins. Advantageously, polyolefins typically have a lower density (below 1 g/cm³ at 20 °C) than water. These polymers therefore tend to float, while the chlorine-containing polymers typically have a higher density (above 1 g/cm³ at 20 °C) than water, thus typically sinking. The layers may accordingly be easily retrieved independently.

The chlorine-containing polymer preferably comprises polyvinyl chloride (PVC), polyvinylidene chloride (PVDC) and/or chlorinated polyethene (CPE), preferably PVC. Typically, the chlorine-containing polymer has a chlorine content between 20 wt% and 90 wt%, preferably between 30 wt% and 80 wt%, based on the total weight of the chlorine-containing polymer. For examples, pure PVC has a Cl content of 57 wt%, PVDC of 73 wt%, and CPE in the range of 34-44 wt%, based on the total weight of the polymer.

In a particular embodiment, the plastic material can be fed to a vessel already comprising water.

The vessel for use in the invention is not particularly limiting but should be able to withstand the conditions used in the method of the present invention. For instance, an acid-resistant coating such as a perfluorinated coating (e.g. a Teflon^{™} coating) may be provided to ensure that corrosion of the vessel is minimized.

The water in the aqueous plastic mixture is superheated to a temperature of at least 210 °C. Superheating is a term used to indicate that a liquid, here water, is heated to a temperature higher than its boiling point under atmospheric pressure. Boiling of the liquid at the superheated pressure is prevented with an increased pressure. The pressure may in the method according to the present invention be autogenous. Superheating the water can be done with the plastic material already in the water or prior to feeding the plastic material to the water. The water may also be heated or superheated before it is fed into the vessel. It is typically preferred to have the water superheated before mixing it with the plastic material as this may require less energy.

During the superheating of the aqueous plastic mixture, the water is maintained at the superheated temperature for a particular residence time. The residence time allows for the chlorine to be removed from the plastic material. The optimal residence time may depend on a variety of aspects such as temperature as well as the size and composition of the plastic material. Typically, the residence time is at least 5 minutes, preferably at least 15 minutes.

Superheating the aqueous plastic mixture to a temperature of at least 220 °C, particularly at least 230 °C, more particularly between 230 °C and 250 °C allows for the highest and fastest chlorine removal from the chlorine-containing polymers. Preferably, the upper limit is around 260 °C, as a higher temperature requires more energy, while a further increase in temperature is typically not associated with a substantially higher degree of chlorine removal.

The present inventors surprisingly found that adding a base before or during the superheating is not required and may even be disadvantageous. As mentioned above, the pH of the water during the superheating is at most 7. Neutral and acidic environments are thus used in the method according to the present invention. It may be appreciated that the pH of the water may start at pH 7 but may drop during superheating due to the formation of hydrogen chloride (HCl). The HCl typically dissolves in the aqueous environment, acidifying the water and lowering the pH.

Further, prior or at the start of superheating, the aqueous plastic mixture may have a low pH (*e.g.* less than 3, or even less than 0) by the addition of an acid, such as sulfuric acid, to the vessel. It was surprisingly found that a lower pH does not adversely affect dechlorination. Accordingly, the water of the aqueous plastic mixture may have a pH of at most 6, or at most 5, such as at most 4 during the superheating. There is in principle no limit to which pH value the acidity of the water may be allowed to drop as a consequence of the formation of the HCl and/or the addition of the acid. However, it may be appreciated that for chemical engineering reasons, the lowest pH during the process may be limited to for instance 0 or 1, in order to avoid corrosion of equipment, for example. It may however also be appreciated that corrosion can be avoided by using appropriated equipment (for instance, coated with acid-resistant coating, *vide supra*) and that the water may be allowed to become saturated with HCl and that any further HCl may be allowed to evaporate out of the solution.

Thus, favorably, using the present invention, no chloride salt is formed. Instead, by maintaining a pH of less than 7, HCl is formed. And favorably, HCl has a positive commercial value and can be recovered and purified by any conventional means in the art.

Another surprising advantage of the present invention is that by maintaining the pH below 7, oxygen is not or only minimally incorporated in the plastic material during the method. Without wishing to be bound by theory, the present inventors believe that dechlorination is associated with formation of carbon-carbon double bonds and crosslinks between carbon atoms. This in contrast to dechlorination in water at higher pH values Accordingly, the dechlorinated plastic material as obtained by the present method may have an oxygen-to-carbon (O/C) ratio of less than 0.2, preferably less than 0.15, more preferably 0.1 or less. This is particularly advantageous for further processing of the dechlorinated polymers in *i.a.* pyrolysis, gasification, naphtha cracking wherein oxygen is highly undesired. Typically, any oxygen present originates from additives such as plasticizers in the plastic material.

The at least partially dechlorinated plastic material may be retrieved from the acidic aqueous solution by any suitable means. Exemplary means are sieving, filtration and the like. In certain embodiment, when a high degree of dechlorination is reached, the dechlorinated plastic material may have a density of less than 1 g/cm³ and will float, thus separating itself. However, this is generally limited to plastic materials containing a relatively high amounts of chlorine-containing polymers and relatively low amounts of fillers and other additives that have a higher density than 1 g/cm³.

In a preferred embodiment according to the present invention, at least 50% of the chlorine present in the plastic material is removed. With the method of the present invention, a removal of at least 80%, typically even at least 90% can be achieved, based on the amount of chlorine originally present in the plastic material. The removal may be increased by an increased residence time and/or an increased temperature. Typically, the at least partially dechlorinated plastic material that is obtainable by this method has a chlorine content of less than 20 wt%, preferably less than 10 wt%, more preferably less than 5 wt%, most preferably less than 1 wt%, based on the total weight of the dechlorinated plastic material. While this chlorine content may still be too high for direct further processing in *i.a.* pyrolysis, gasification, naphtha cracking, it does reduce the need for posttreatment and dilution before further processing.

The carbon-to-oxygen ratio in the dechlorinated plastic material is typically less than 0.2, preferably less than 0.15, more preferably 0.1 or less.

It can be appreciated that the present dechlorination method may be performed at a suitable liquid to solid (L/S) ratio in the reactor vessel. The liquid to solid ratio herein refers to the weight ratio of the water to the plastic material in the vessel. Depending on the plastic material composition and the chlorine content of the chlorine-containing polymer and/or of the plastic material, more or less water is preferred. The L/S ratio in the vessel is therefore preferably at least 10:1, preferably at least 15:1, more preferably at least 20:1, most preferably the ratio is between 20:1 and 40:1.

The method may be performed batch wise, but a continuous method is preferred. As such, the method is preferably carried out in a continuous-flow reactor. It may also be preferred to perform the method more than once, *i.e.* retrieve the at least partially dechlorinated plastic material, wash and subsequently mix the at least partially dechlorinated plastic material as plastic material with a fresh aqueous environment and superheat the resulting mixture. This may lead to more chlorine to be recovered from the chlorine-containing polymers.

For the purpose of clarity and a concise description features are described herein as part of the same or separate embodiments, however, it will be appreciated that the scope of the invention may include embodiments having combinations of all or some of the features described.

The present invention can be illustrated by the following nonlimiting examples.

### Examples

A commercially available grey PVC pipe was sawn in pieces (rings, R). The rings were added to water in an autoclave and the water was superheated to a desired temperature for 30 min. The reached temperature is indicated in Table 1.

In all listed examples, about 2 gram of PVC and 75 ml of demineralized water was used. In certain examples, only demineralized (demi) water was used without the addition of acid and/or base. In certain other examples, sulfuric acid (A) in an amount of 1.2 gram. In yet other (comparative) examples, sodium hydroxide (B) in an amount of 2.1 gram was added. The examples with only demineralized water, acidify strongly during the test, due to the release of HCl from the PVC and subsequent dissolution in the water. The end pH is very close to the pH of the examples that start with H₂SO₄.

For all examples, the composition in terms of atomic content was determined using Ion Chromatography for Cl, and an elemental analyzer for C, H, N and O (FlashSmart^{™} of Intersciences, based on the Dumas method). In addition, the pH-value of the water was measured after superheating. The results are provided in Table 1.

The results show that in all examples, typically 85-90% of Cl is removed with 250 °C being the most effective temperature. The treatment in water, alkaline and acid give comparable results in Cl-removal rate, with treatment in NaOH is slightly less effective.

The O/C ratios show a difference between the treatment in alkaline and the treatment in acid. When starting in demineralized water, the liquid acidifies quickly due to the release and dissolution of HCl. In the feedstock, the O/C molar ratio is 0.10-0.11. When treatment takes place in in alkaline, the O/C ratio doubles to 0.19-0.22. When the treatment is started in demineralized water, the O/C ratio remains at 0.10 in the case of rings, but drop to 0.04 in the case of powder. In H₂SO₄ solution, the O/C ratio increases slightly to 0.12.

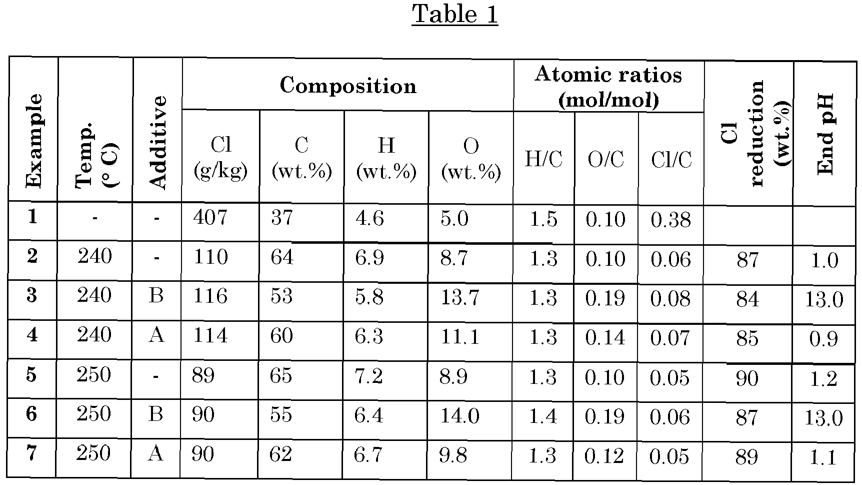

## Claims

1. Method for dechlorination of plastic material comprising a chlorine-containing polymer, wherein the method comprises:
- providing the plastic material comprising the chlorine-containing polymer and water in a vessel to provide an aqueous plastic mixture; and
- superheating the aqueous plastic mixture to a temperature of at least 210 °C, during which the pH of the water in the aqueous plastic mixture is maintained at at most 7 to obtain a dechlorinated plastic material.

2. Method according to the previous claim, wherein the plastic material comprises at least 50 wt%, preferably at least 70 wt% of the chlorine-containing polymer based on the total weight of the plastic material.

3. Method according to any of the previous claims, wherein the plastic material is a plastic waste stream.

4. Method according to any of the previous claims, wherein the chlorine-containing polymer comprises a chlorinated polyolefin, preferably polyvinyl chloride (PVC), polyvinylidene chloride (PVDC), chlorinated polyethene (CPE) and/or copolymers thereof, most preferably PVC.

5. Method according to any of the previous claims, wherein the chlorine-containing polymer has a chlorine content of at least 20 wt%, preferably between 20 wt% and 90 wt%, more preferably between 30 wt% and 80 wt%, based on the total weight of the chlorine-containing polymer.

6. Method according to any of the previous claims, wherein the plastic material has a chlorine content of at least 10 wt%, preferably at least 20 wt%, more preferably at least 40 wt%, based on the total weight of the plastic material.

7. Method according to any of the previous claims, wherein the aqueous plastic mixture is superheated to a temperature of at least 220 °C, preferably at least 230 °C, more preferably between 230 °C and 260 °C.

8. Method according to any of the previous claims, wherein the water of the aqueous plastic mixture has a pH during superheated is maintained at at most 6, preferably at most 5, more preferably at most 4.

9. Method according to any of the previous claims, wherein providing the plastic material and water to the vessel comprises feeding the plastic water to the vessel containing pre-heated water.

10. Method according to any of the previous claims, wherein the aqueous plastic mixture is superheated for at least 5 minutes, preferably at least 15 minutes.

11. Method according to any of the previous claims, wherein the plastic material comprises pieces of which the smallest dimension is at most 10 mm, preferably at most 3 mm, more preferably at most 2 mm, even more preferably at most 1 mm.

12. Method according to any of the previous claims, wherein the weight ratio of the water to the plastic material in the vessel (L/S ratio) is at least 10:1, preferably at least 15:1, more preferably at least 20:1, most preferably the ratio is between 20:1 and 40:1.

13. Method according to any of the previous claims, wherein the dechlorinated plastic material has a chlorine content of less than 20 wt%, preferably less than 10 wt%, more preferably less than 5 wt%, most preferably less than 1 wt%, based on the total weight of the dechloronated plastic material.

14. Method according to any of the previous claims, wherein the dechlorinated plastic material has an oxygen-to-carbon (O/C) ratio of less than 0.2, preferably less than 0.15, more preferably 0.1 or less.

15. Dechlorinated plastic material obtainable by the method according to any of the previous claims, wherein the dechlorinated plastic material has a chlorine content of less than 5 wt% was on the total weight of the dechloronated plastic material and/or an oxygen-to-carbon (O/C) ratio of less than 0.2, preferably less than 0.15, more preferably 0.1 or less.
